# EUROPÄISCHE PATENTANMELDUNG

(11) **EP 2 684 597 A1**
(43) Veröffentlichungstag der Anmeldung: **15.01.2014**
(21) Anmeldenummer: 12005203.0
(22) Anmeldetag: 14.07.2012
(51) Int. Cl.: B01D 53/94, F01N 9/00, F01N 3/20

(54) **Verfahren zur Verminderung von Stickoxiden aus Dieselmotorenabgasen**

(71) Anmelder: Deutz AG, 51149 Köln (DE)
(72) Erfinder: Wittrock, Meike Dr., 51427 Bergisch-Gladbach (DE); Swiatlak, Oliver, 42657 Solingen (DE)

(57) **Zusammenfassung**

Es wird ein Verfahren zur Verminderung von Stickoxiden in Dieselmotorenabgasen mittels eines Abgasnachbehandlungssystems beschrieben, welches eine Vorrichtung zur Eindosierung von Ammoniak und/oder einer zu Ammoniak zersetzlichen Verbindung und zwei SCR-Einheiten umfasst. Zwischen der ersten und zweiten SCR-Einheit ist ein Ammoniaksensor angeordnet. Im Abgasendrohr nach der zweiten SCR-Einheit ist ein Stickoxidsensor enthalten. Die Signale des Ammoniaksensors und des NOₓ-Sensors werden in definierter Weise zu dem IST-Wert eines virtuellen NOₓ/ NH₃-Sensors zusammengefasst, der als Eingangsgröße für einen PI- oder einen PID-Regler dient, welcher die in das Abgas einzudosierende Reduktionsmittelmenge bedarfsgerecht regelt.

## Beschreibung

Zur Einhaltung der ab 2014 geltenden europäischen und US-amerikanischen Emissionsgesetzgebung (EU Stufe IV bzw. Tier4 (final)) für sogenannte Nonroad-Dieselmotoren ist die Ausstattung dieser Dieselmotoren mit einem Abgasreinigungssystem unumgänglich. Typische Abgasreinigungssysteme enthalten neben einem Dieseloxidationskatalysator zur oxidativen Entfernung von Kohlenmonoxid und Kohlenwasserstoffen und gegebenenfalls einem abströmseitig dazu angeordneten Dieselpartikelfilter eine Entstickungseinheit. Typisch zur Entstickung von Dieselmotorenabgasen im Nutzfahrzeug- und Nonroad-Bereich sind Einheiten zur selektiven katalytischen Reduktion von Stickoxiden unter Verwendung eines sogenannten SCR-Katalysators (SCR: Selective Catalytic Reduction) und einer Vorrichtung zur Eindosierung von Ammoniak oder einer zu Ammoniak zersetzlichen Verbindung als Reduktionsmittel in den zu reinigenden Abgasstrom. Bevorzugte Reduktionsmittel sind wässrige Harnstofflösung oder Ammoniumcarbamatlösung, besonders bevorzugt ist Harnstofflösung. Solche SCR-Einheiten sind typischerweise abströmseitig zu einem vorgelagerten Dieseloxidationskatalysator (DOC) und/oder zu einem Dieselpartikelfilter (DPF) angeordnet.

Für die Erfüllung der Emissionsstandards EU-Stufe IV bzw. Tier4f kommen u. a. Systeme gemäß EP-B 1 054 722 oder Systeme ohne Dieselpartikelfilter (nur DOC + SCR) zum Einsatz. Insbesondere in den letztgenannten "offenen" Systemen müssen in allen Betriebspunkten auch nach längerer Betriebsdauer maximale SCR-Wirkungsgrade erreicht werden, da der Verbrennungsprozess bei Motoren, zu dessen Abgasreinigung ein System ohne Dieselpartikelfilter zum Einsatz kommt, so abgestimmt ist, dass stets möglichst geringe Partikelemissionen auftreten. Dies verursacht deutlich erhöhte NOₓ-Rohemissionen, so dass Stickoxid-Konvertierungen in der SCR-Einheit von über 90 % über die gesamte Betriebsdauer des Systems erforderlich sind, um die gesetzlichen Emissionsgrenzwerte zu erreichen.

Die Wirkungsgrade des SCR-Systems werden außer von Temperatur und Massenstrom über dem SCR-Katalysator bestimmt durch das NO₂/NOₓ-Verhältnis vor SCR-Katalysator und durch die Menge des eindosierten Reduktionsmittels. Das NO₂/NOₓ-Verhältnis wird über den vorgelagerten Abgasreinigungsaggregaten DOC und/oder DPF eingestellt, wobei bevorzugt Werte von 0,2 bis 0,7, besonders bevorzugt von 0,4 bis 0,6, erreicht werden.

Eine Unterdosierung des Reduktionsmittels (beispielsweise α = 0,8, wobei mit α das Molverhältnis von NH₃ zu NOₓ im zu reinigenden Abgas vor SCR-Katalysator angegeben wird) führt zu einer Begrenzung des theoretisch möglichen Stickoxidumsatzes entsprechend der Verfügbarkeit des Reduktionsmittels (für α = 0,8 also max. 80 % Stickoxidumsatz). Durch eine Überdosierung des Reduktionsmittels (α > 1) können über dem SCR-Katalysator die thermodynamisch möglichen, maximalen Stickoxidumsätze erzielt werden, die nur noch durch die stofflichen Eigenschaften des Katalysators unter den jeweiligen Betriebsbedingungen (Abgasmassenstrom, Temperatur, NO₂/NOₓ vor SCR) bestimmt werden.

Allerdings kann eine Überdosierung des Reduktionsmittels zu Ammoniakdurchbrüchen durch den SCR-Katalysator führen. Da Ammoniak gemäß EU-Gefahrstoffkennzeichnung ein giftiges und umweltgefährdendes Gas ist, müssen Restemissionen unbedingt vermieden werden.

Systeme nach dem Stand der Technik regeln die Reduktionsmitteldosierung typischerweise modellgestützt, d. h. die im Motorsteuergerät hinterlegte Software berechnet auf der Grundlage des NOₓ-Gehalts in der Rohemission und der zuvor experimentell ermittelten Wirkungsgrade des SCR-Katalysators in jedem denkbaren Betriebspunkt den stöchiometrischen Bedarf an Reduktionsmittel und steuert dementsprechend die Menge an einzudosierender Harnstofflösung (sog. "Vorsteuermenge"). Erschwert wird diese Vorsteuerung dadurch, dass insbesondere SCR-Katalysatoren auf der Basis von mit Übergangsmetallen ausgetauschten Zeolithen über eine signifikante Ammoniakspeicherfähigkeit verfügen. Die Menge an Ammoniak, die in den Katalysator eingelagert werden kann, ist abhängig von der Betriebstemperatur und dem Alterungszustand des Katalysators. Dementsprechend wird je nach Betriebspunkt ein Teil der eindosierten Reduktionsmittelmenge dazu verwandt, den Ammoniakspeicher im Katalysator aufzufüllen. Durch den Speicher können insbesondere im dynamischen Betrieb kurzzeitig auftretende Unterdosierungen durch Reduktion der im Abgas enthaltenen Stickoxide mit aus dem Speicher desorbierendem Ammoniak kompensiert werden. Der Ammoniakspeicher muss dann durch Reduktionsmittelüberdosierung wieder aufgefüllt werden.

Dieses Speicherverhalten des Katalysators erschwert die optimale Anpassung des Vorsteuermodells, da die chemisch-physikalischen Vorgänge im SCR-Katalysator in ihrer Komplexizität mathematisch ausgesprochen schwierig zu beschreiben sind. Die modellgestützte Regelung der Reduktionsmitteldosierung hat daher den Nachteil, dass insbesondere im transienten Betrieb des Motors maximale Wirkungsgrade des SCR-Katalysators nicht in allen Betriebspunkten ohne Ammoniakdurchbrüche zu gewährleisten sind.

Aus dem Stand der Technik sind SCR-Systeme bekannt, in denen Ammoniakdurchbrüche nach SCR-Katalysator mittels Ammoniaksensor erkannt werden.

So offenbart WO 2010/062566 den Aufbau und die Funktionsweise eines Ammoniaksensors.

DE 10 2006 051 790 offenbart ein Abgasnachbehandlungssystem zur Reinigung der Abgase eines Verbrennungsmotors umfassend in Strömungsrichtung des Abgases in dieser Reihenfolge einen ersten Oxidationskatalysator, eine Vorrichtung zum Einbringen eines Brennstoffes in den Abgasstrang, einen zweiten Oxidationskatalysator, einen Dieselpartikelfilter, eine Vorrichtung zur Injektion eines hinsichtlich der Reduktion von Stickoxiden wirksamen Reduktionsmittels, einen SCR-Katalysator und gegebenenfalls einen (Ammoniak-)Sperrkatalysator mit oxidationskatalytischer Wirksamkeit. Stromab zum SCR-Katalysator kann ein Ammoniaksensor zur Verbesserung der Regelung der Zugabe des Reduktionsmittels oder zu Diagnosezwecken vorgesehen sein.

EP-A-2 317 091 offenbart ein Abgasreinigungssystem umfassend in Strömungsrichtung des Abgases in dieser Reihenfolge einen Oxidationskatalysator, ein Abgasrohr mit einer Dosiervorrichtung für Harnstofflösung und einen SCR-Katalysator. Im SCR-Katalysator ist ein Temperatursensor integriert. Abströmseitig zum SCR-Katalysator ist ein Ammoniaksensor zur Detektion der Ammoniakkonzentration im Abgas nach SCR-Katalysator vorgesehen. Abströmseitig zum Ammoniaksensor kann ein Ammoniakoxidationskatalysator angeordnet sein. Im in EP-A-2 317 091 offenbarten System wird eine zu dosierende Harnstofflösungsmenge (Vorsteuermenge) in Abhängigkeit von Drehzahl und Drehmoment des Motors bestimmt und eindosiert. Gleichzeitig wird aus dem zeitlichen Verzug zwischen Dosierbeginn und beginnendem Ammoniakschlupf die Ammoniakspeicherkapazität des SCR-Katalysators berechnet. Wird über den Ammoniaksensor nach SCR-Katalysator ein Ammoniakschlupf angezeigt, so wird die tatsächlich einzudosierende Menge an Harnstofflösung gegenüber der Vorsteuermenge vermindert. Ergibt die Berechnung der Ammoniakspeicherkapazität des SCR-Katalysators einen Wert, der kleiner ist, als ein in der Steuerungssoftware hinterlegter Referenzwert, so wird die tatsächlich einzudosierende Menge an Harnstofflösung gegenüber der Vorsteuermenge erhöht.

EP-A-2 317 090 offenbart ein Verfahren zum Betreiben eines SCR-Systems, in dem eine vorbereitende Rücknahme der dosierten Reduktionsmittelmenge erfolgt, wenn Ammoniakdurchbrüche durch den SCR-Katalysator aufgrund der Betriebsbedingungen zu erwarten sind. Solche Änderungen der Betriebsbedingungen umfassen im Besonderen Änderungen des Abgasmassenstromes und/oder ein Ansteigen der Abgastemperatur. EP-A-2 317 090 offenbart weiterhin ein Verfahren zur Erkennung eines Ammoniakschlupfrisikos mittels eines zwischen zwei SCR-Katalysatoren angeordneten Ammoniaksensors. Wird nach dem ersten anströmseitigen SCR-Katalysator ein vordefinierter Ammoniakschlupf überschritten, so wird die Reduktionsmitteldosierung ausgeschaltet.

DE 10 2008 043 141 offenbart ein Abgasreinigungssystem für eine Dieselbrennkraftmaschine umfassend in Strömungsrichtung des Abgases in dieser Reihenfolge einen Dieseloxidationskatalysator, eine Vorrichtung zum Eindosieren von Ammoniak in den Abgasstrang, einen SCR-Katalysator, einen NOₓ-Sensor zur Detektion von Stickoxiden im Abgas, einen Ammoniakoxidationskatalysator, eine Vorrichtung zur Eindosierung von Wasser in den Abgasstrang und einen Ammoniaksensor. Wird nach dem Ammoniakoxidationskatalysator mittels Ammoniaksensor eine einen vordefinierten Wert übersteigende Ammoniakkonzentration im Abgas detektiert, so wird abströmseitig des Ammoniakoxidationskatalysators Wasser in den Abgasstrang eindosiert, um das am Abgasendrohr vorhandene Ammoniak zu "fangen" und somit den Austritt des Ammoniaks in die Atmosphäre zu vermeiden.

US 2009/0272099 und US 2010/0242440 offenbaren Abgasnachbehandlungssysteme umfassend in Strömungsrichtung des Abgases in dieser Reihenfolge einen Oxidationskatalysator, einen Dieselpartikelfilter, eine Vorrichtung zur Eindosierung eines Reduktionsmittels wie beispielsweise Ammoniak oder Harnstofflösung, einen SCR-Katalysator und einen Ammoniakoxidationskatalysator. Ammoniaksensoren können abströmseitig zum Ammoniakoxidationskatalysator, anströmseitig zum SCR und/oder anströmseitig zum Ammoniakoxidationskatalysator angeordnet sein. Diese werden ergänzt durch NOₓ-Sensoren zur Erfassung des Stickoxidgehaltes im Abgas anströmseitig zum Dieseloxidationskatalysator, abströmseitig zum SCR und/oder abströmseitig zum Ammoniakoxidationskatalysator. Mit Hilfe dieser Sensorsignale werden die tatsächlichen Reduktionsmitteldosierraten derart angepasst, dass durch Fehler oder Unstimmigkeiten im Vorsteuermodell (z. B. Modellierungsfehler, Abweichungen in den Realwirkungsgraden durch Katalysatoralterung oder Sensoralterung, Abweichungen in der Reduktionsmittelkonzentration, Einspritzverzögerungen) zustande kommende suboptimale Reduktionsmitteldosiermengen korrigiert werden.

WO 2011/139971 offenbart ein Verfahren zum Betreiben eines SCR-Systems, welches zwei in Strömungsrichtung des Abgases nacheinander angeordnete SCR-Katalysatoren aufweist, sowie einen Ammoniaksensor zwischen den beiden SCR-Katalysatoren und einen NOₓ-Sensor abströmseitig zum zweiten, in Strömungsrichtung nachgeordneten SCR-Katalysator. Das Verfahren zeichnet sich dadurch aus, dass der Vorgabewert für die zwischen den beiden SCR-Katalysatoren herrschende Ammoniakkonzentration im Abgas, die mittels Ammoniaksensor bestimmt wird, geändert bzw. angepasst wird in Abhängigkeit von der mittels NOₓ-Sensor bestimmten NOₓ-Konzentration im Abgas nach dem zweiten SCR-Katalysator.

Der vorliegenden Erfindung lag die Aufgabe zugrunde, ein Verfahren zur Verminderung von Stickoxiden aus Dieselmotorenabgasen mittels selektiver katalytischer Reduktion bereit zu stellen, das eine maximale Ausnutzung der theoretisch möglichen Wirkungsgrade der SCR-Katalysatoren durch die maximal mögliche Bereitstellung von Ammoniak und/oder einer zu Ammoniak zersetzlichen Verbindung als Reduktionsmittel gewährleistet, wobei Durchbrüche von Ammoniak durch das SCR-System systematisch vermieden werden und welches sich zugleich durch einen möglichst geringen Applikations- und Bedatungsaufwand auszeichnet.

Die Aufgabe wird gelöst durch ein Verfahren zur Verminderung von Stickoxiden aus Dieselmotorenabgasen mittels eines Abgasnachbehandlungssystems, das in Strömungsrichtung des Abgases in dieser Reihenfolge folgendes umfasst:
- eine Vorrichtung zur Eindosierung von Ammoniak und/oder einer zu Ammoniak zersetzlichen Verbindung als Reduktionsmittel in das zu reinigende Abgas;
- einen oder mehrere SCR-Katalysatoren, die eine erste SCR-Einheit bilden;
- einen Ammoniaksensor zur Bestimmung der Ammoniakkonzentration im Abgas nach der ersten SCR-Einheit;
- einen oder mehrere SCR-Katalysatoren und/oder einen Ammoniakoxidationskatalysator, die eine zweite SCR-Einheit bilden,
- und einen Stickoxidsensor (NOₓ-Sensor) zur Bestimmung der Konzentration der Stickoxide (NOₓ) im Abgasendrohr.

Im erfindungsgemäßen Verfahren wird die in das Abgas einzudosierende Menge von Ammoniak und/oder einer zu Ammoniak zersetzlichen Verbindung eingestellt unter Zuhilfenahme der mittels Ammoniaksensor bestimmten Ammoniakkonzentration im Abgas nach der ersten SCR-Einheit und aus der mittels NOₓ-Sensor bestimmten Stickoxidkonzentration im Abgasendrohr. Das Verfahren ist **dadurch gekennzeichnet, dass** aus den Sensorsignalen des Ammoniaksensors und des NOₓ-Sensors der IST-Wert eines virtuellen NOₓ/NH₃-Sensors berechnet wird, der als Eingangsgröße für einen PI-Regler oder einen PID-Regler dient, welcher mittels Abgleich von IST-Wert und einem vorgegebenen SOLL-Wert eine einzudosierende Menge für Ammoniak und/oder die zu Ammoniak zersetzlichen Verbindung bestimmt.

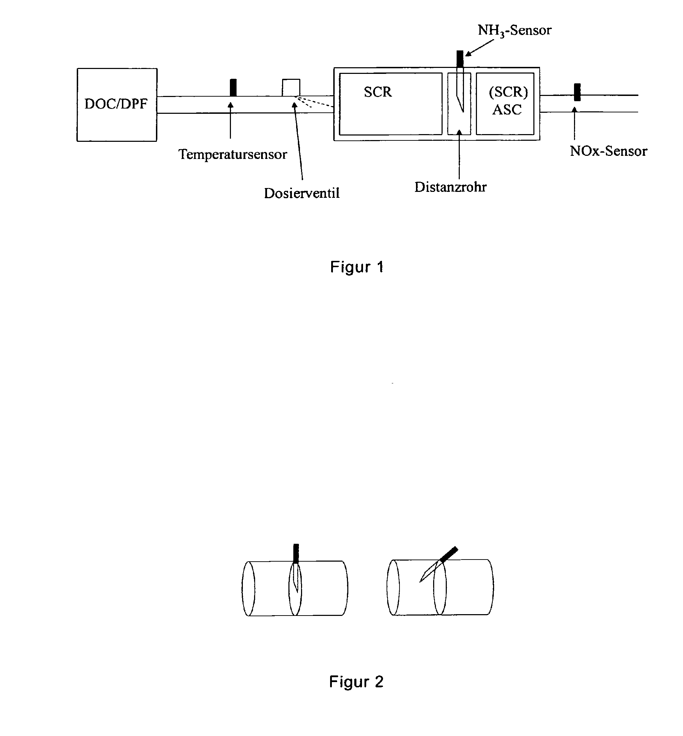

Figur 1 zeigt schematisch den Aufbau eines Abgasnachbehandlungssystems zur Durchführung des erfindungsgemäßen Verfahrens.

Das vom Motor erzeugte, zu reinigende Abgas wird gegebenenfalls zunächst durch einen anströmseitig angeordneten DOC und/oder DPF und ein Mischrohr zu einer ersten SCR-Einheit geleitet, über der die im zu reinigenden Abgas enthaltenen Stickoxide mittels Ammoniak aus wässriger Harnstofflösung (AdBlue^{®}) reduziert werden und die aus einem oder mehreren SCR-Katalysatoren gebildet wird. Im Mischrohr zwischen DOC/DPF und erster SCR-Einheit wird die Abgastemperatur mittels geeignetem Temperatursensor gemessen. Abströmseitig zum Temperatursensor ist die Dosiervorrichtung für Harnstofflösung angeordnet, mittels derer eine vorbestimmte Menge an Harnstofflösung ins zu reinigende Abgas eindosiert wird. An das Mischrohr, das die Dosiervorrichtung und gegebenenfalls statische Mischer zur besseren Homogenisierung von zu reinigendem Abgas und Reduktionsmittel umfasst, ist ein Gehäuse, enthaltend mindestens einen SCR-Katalysator (erste SCR-Einheit), einen Ammoniaksensor und mindestens einen Ammoniakoxidationskatalysator (zweite SCR-Einheit), angeordnet.

In einer möglichen Ausführungsform sind die erste SCR-Einheit, bestehend aus einem oder mehreren SCR-Katalysatoren, und die zweite SCR-Einheit, bestehend aus mindestens einem Ammoniakoxidationskatalysator, im Gehäuse durch ein Distanzrohr räumlich voneinander getrennt. In diesem Distanzrohr ist ein angeschrägtes Röhrchen zur Entnahme von Abgas mittig angeordnet. Über dieses Röhrchen wird Abgas aus der Anlage entnommen und an den Messkopf eines darüber liegenden Ammoniaksensors transportiert, so dass die Konzentration von Ammoniak im Abgas nach der ersten SCR-Einheit jederzeit zuverlässig detektiert werden kann. Nach Durchgang durch das Distanzrohr wird das zu reinigende Abgas über den Ammoniakoxidationskatalysator geleitet. Abströmseitig zum Ammoniakoxidationskatalysator ist ein NOₓ-5ensor angeordnet, mit dessen Hilfe die am Ausgang der Abgasanlage vorliegende Restmenge an Stickoxiden bestimmt wird.

In einer anderen Ausführungsform liegt der Ammoniakoxidationskatalysator als abströmseitige Zone auf einem weiteren, in der zweiten SCR-Einheit vorhandenen SCR-Katalysator vor. In diesem Falle kann die vorstehend beschriebene Anordnung des Ammoniaksensors grundsätzlich beibehalten werden. Diese Anordnung hat den Vorteil, dass durch die hinter dem Ammoniaksensor ergänzend vorhandene SCR-katalytisch aktive Zone über der ersten, anströmseitigen SCR-Einheit höhere Ammoniakdurchbrüche und somit höhere Reduktionsmittelüberdosierungen zugelassen werden können. Dadurch wird eine optimale Ausnutzung des SCR-Umsatzvermögens der anströmseitigen SCR-Einheit sichergestellt, ohne dass am Ende der Abgasleitung Ammoniakdurchbrüche zu befürchten sind.

Alternativ kann der Ammoniaksensor selbst oder ein zum Sensor führendes Abgasentnahmeröhrchen in einer Bohrung in den abströmseitigen Katalysatorwabenkörper auf der Grenzfläche zwischen SCR-katalytisch aktiver Zone und Ammoniakoxidationszone eingebracht werden, wobei die Bohrung sowohl vertikal als auch in Schräglage in Katalysatorwabenkörper und Gehäuse angeordnet werden kann, wie in Figur 2 dargestellt. In diesem Fall ist die SCR-katalytisch aktive Zone des zweiten, abströmseitig angeordneten katalytisch aktiven Wabenkörpers als Bestandteil der ersten SCR-Einheit zu sehen. Durch eine solche Anordnung kann die Reduktionsmitteldosierung über die gesamte verfügbare SCR-katalytisch aktive Zone optimal angepasst werden, wobei der maximal zulässige Ammoniakschlupf über den SCR-katalytisch aktiven Zonen auf den Wirkungsgrad des Ammoniakoxidationskatalysators anzupassen ist. Letztere Anordnung ist vor allem bei Verwendung ovaler Katalysatorgeometrien vorteilhaft.

Durch Einführung des Ammoniaksensors und Regelung der Reduktionsmitteldosierung unter Berücksichtigung des mittels des Ammoniaksensors detektierten, tatsächlichen Ammoniakdurchbruches nach SCR-Katalysator sowie des Wirkungsgrades des nachgeordneten Ammoniakoxidationskatalysators wird eine stets vollständige Ausnutzung des im jeweiligen Betriebspunkt maximalen SCR-Wirkungsgrades auch unter transienten Bedingungen möglich. Dabei erfolgt die Dosierung des Reduktionsmittels stets so, dass am Ammoniaksensor gezielt eine maximal zulässige Ammoniakkonzentration eingestellt wird, die höchstens so groß ist, dass die durchbrechende Ammoniakmenge in jedem Betriebspunkt vollständig von der zweiten SCR-Einheit, umfassend einen Ammoniakschlupfkatalysator bzw. einen zonierten Katalysator, enthaltend eine SCR-katalytisch aktive Zone und eine ammoniakoxidationskatalytisch aktive Zone, zu Stickstoff umgesetzt werden kann. Hierbei kommt das erfindungsgemäße Regelungskonzept unter Einbindung des Ammoniaksensorsignals und des Signals des im Abgasendrohr angeordneten NOₓ-Sensors zur Anwendung. Daraus ergibt sich die optimale Dosiermenge für das Reduktionsmittel, die den vollen Wirkungsgrad des SCR-Katalysators und somit eine Minimalmenge an Stickoxiden am hinteren NOₓ-Sensor sicherstellt. Wesentlicher Bestandteil des Regelungskonzeptes und somit des erfindungsgemäßen Verfahrens ist dabei die gezielte Dosierung einer Reduktionsmittelmenge, die größer ist, als die, die der exakten, entsprechend des Wirkungsgrades des SCR-Katalysators stöchiometrisch benötigten Reduktionsmittelmenge entspricht. Somit wird über der ersten, anströmseitigen SCR-Einheit stets eine tatsächliche Überdosierung des Reduktionsmittels erreicht, ohne dass hinter dem abströmseitig angeordneten Ammoniakschlupfkatalysator Ammoniakdurchbrüche zu beobachten sind. Das erfindungsgemäße Regelungskonzept, das nachstehend noch genauer erläutert wird, hat den Vorteil, dass mit der gezielten Reduktionsmittelüberdosierung über der ersten SCR-Einheit stets eine optimale katalytische Ausnutzung dieser Einheit gewährleistet wird.

Des Weiteren kann durch Anwendung des erfindungsgemäßen Verfahrens auf ein Vorsteuermodell zur Voreinstellung einer gewünschten Reduktionsmittelmenge vollständig verzichtet werden. Damit entfallen aufwändige Applikations- und Bedatungsarbeiten wie beispielsweise die experimentelle Bestimmung der maximalen Wirkungsgrade des SCR-katalysatoren oder der Speicherkapazität der SCR-Katalysatoren, deren Kenntnis und Bedatung im Steuergerät eine Voraussetzung für eine sinnvolle Vorsteuerung der Reduktionsmitteldosierung sind.

Im erfindungsgemäßen Verfahren wird aus den Sensorsignalen des Ammoniaksensors und des NOₓ-Sensors der IST-Wert eines virtuellen NOₓ/NH₃-Sensors berechnet. Dabei wird zunächst das NOₓ-Sensorsignal um das NH₃-Signal korrigiert. Dieser Schritt ist erforderlich, da NOₓ-Sensoren eine Querempfindlichkeit gegenüber Ammoniak aufweisen, d. h. im Abgas enthaltenes Ammoniak wird vom NOₓ-Sensor ohne Korrektur als zusätzliches Stickoxid ausgegeben. Die Korrektur des NOₓ-Sensorsignals erfolgt durch Subtraktion der vom Ammoniaksensor angegebenen Ammoniakkonzentration im Abgas von der vom NOₓ-Sensor ausgegebenen Stickoxidkonzentration. Dadurch wird ein korrigierter NOₓ-Wert *NOxCorDS* erhalten, der die tatsächliche Stickoxidkonzentration im Abgas im Abgasendrohr angibt. Der resultierende Wert darf dabei per definitionem nicht kleiner als Null sein und wird deshalb auf Null als Minimalwert begrenzt.

Diese Begrenzung kommt immer dann zur Anwendung, wenn die Ammoniakkonzentration im Abgas zwischen der ersten SCR-Einheit und der mindestens den Ammoniakoxidationskatalysator enthaltenden zweiten SCR-Einheit beispielsweise im dynamischen Motorbetrieb kurzzeitig größer ist als die gemessene Stickoxidkonzentration im Abgasendrohr. Wie bereits erwähnt, ist die dabei maximal zulässige Ammoniakkonzentration im Abgas vor der den Ammoniakoxidationskatalysator enthaltenden zweiten SCR-Einheit maximal so hoch, dass sie vom Ammoniakoxidationskatalysator in jedem Betriebspunkt selektiv und vollständig zu Stickstoff umgesetzt werden kann. Unkontrollierte Ammoniakdurchbrüche im Abgasendrohr sind demzufolge nicht zu befürchten.

Im nächsten Schritt wird der erhaltene Wert *NOxCorDS,* der die tatsächliche Stickoxidkonzentration im Abgasendrohr angibt, mit dem Faktor (-1) multipliziert, wobei ein Wert *[-NOxCorDS]* erhalten wird. Dieser Wert ist als erster, unkorrigierter Ausgabewert (IST-Wert) des virtuellen NOₓ/NH₃-Sensors zu sehen, wobei der virtuelle NOₓ/NH₃-Sensor im negativen Bereich die NOₓ-Konzentrationen am Abgasendrohr und im positiven Bereich die Ammoniakkonzentrationen im Abgasendrohr angibt. Im Übergangsbereich des virtuellen Sensors von NOₓ-Detektion zu NH_{#3}-detektion erfolgt eine Gewichtung des Wertes *[-NOxCorDS]* mit Hilfe eines vorab zu bedatenden Kennfeldes, welches von der vom Ammoniaksensor detektierten Ammoniakkonzentration nach der ersten SCR-Einheit abhängt.

Der Gewichtungsfaktor, mit dem der *Wert [-NOxCorDS]* zu multiplizieren ist, nimmt Werte zwischen 0 und 1 an. Er wird aus einem Kennfeld vorgegeben und so gewählt, dass der Gewichtungsfaktor den Wert 1 annimmt, solange der Ammoniaksensor im Abgas nach der ersten SCR-Einheit eine Ammoniakkonzentration detektiert, die größer Null ist, jedoch einen ersten vorgegebenen, maximal zulässigen Wert nicht überschreitet. Dieser erste vorgegebene, maximal zulässige Wert ist so gewählt, dass die anstehende Ammoniakkonzentration vor der zweiten SCR-Einheit in derselben in allen Betriebspunkten des Motors selektiv und vollständig zu Stickstoff umgesetzt werden kann. In diesem Falle gibt der virtuelle NOₓ/NH₃-Sensor negiert die korrigierte und somit tatsächlich vorliegende NOₓ-Konzentration im Abgas im Abgasendrohr an.

In dieser Phase wird die Dosiermenge des Reduktionsmittels erhöht, so dass die Ammoniakkonzentration nach der ersten SCR-Einheit ansteigt. Aufgrund des durch die Überdosierung erhöhten realen Wirkungsgrades der ersten SCR-Einheit sinkt der reale NOₓ-Konzentrationswert im Abgasendrohr, der IST-Wert des virtuellen NOₓ/NH₃-Sensors geht stetig gegen Null, die Gewichtung des korrigierten *Wertes [-NOxCorDS]* geht stetig gegen Null. Schließlich nimmt der Gewichtungsfaktor den Wert Null an, wenn die durch den Ammoniaksensor detektierte Ammoniakkonzentration im Abgas nach der ersten SCR-Einheit einen zweiten vorgegebenen, maximal zulässigen Wert erreicht oder übersteigt. Dieser zweite vorgegebene, maximal zulässige Wert ist so gewählt, dass die bei dieser Dosierung durch die zweite SCR-Einheit durchbrechende Ammoniakkonzentration einen systemisch oder gesetzlich vorgegebenen Grenzwert nicht übersteigt. So kann dieser zweite Wert der maximal zulässigen Konzentration von Ammoniak im Abgasendrohr beispielsweise 10 ppm betragen - ein Wert, der nach derzeitiger Gesetzeslage als mittlere Ammoniakemission über einen Zertifizierungstest des Motors zulässig ist. Wird die entsprechende Ammoniakkonzentration im Abgasendrohr überschritten, so sorgt der im System vorhandene PI- oder PID-Regler dafür, dass die Menge der eindosierten Reduktionsmittelmenge entsprechend zurückgenommen wird.

Der in dieser Weise generierte IST-Wert des virtuellen NOₓ/NH₃-Sensors dient dem PI-Regler oder dem PID-Regler als IST-Wert-Vorgabe.

Als SOLL-Wert des Reglers wird vorzugsweise die maximal zulässige Ammoniakkonzentration im Abgas nach der ersten SCR-Einheit vorgegeben, wobei der SOLL-Wert in diesem Fall Werte größer Null annimmt.

Ebenso kann als SOLL-Wert die maximal zulässige NOₓ-Konzentration im Abgasendrohr gewählt werden. In diesem Fall würde der SOLL-Wert negative Werte aufweisen. Die Begrenzung der maximal zulässigen Ammoniakkonzentration im Abgas nach der ersten SCR-Einheit ist in diesem Fall sichergestellt durch die Vorgaben für die Berechnung des IST-Wertes des virtuellen NOₓ/NH₃-Sensors. Würde der SOLL-Wert des Reglers gleich Null gesetzt, so wäre dies gleichbedeutend mit dem Ammoniakschlupf zwischen der ersten und zweiten SCR-Einheit. Eine Überdosierung der ersten SCR-Einheit und somit eine jederzeit hinreichende Reduktionsmittelversorgung könnte in diesem Fall nicht mehr sichergestellt werden, da insbesondere in Betriebsphasen, in denen die Temperatur des SCR-Katalysators sinkt und sich somit die physikalische Ammoniakspeicherkapazität vergrößert, dosiertes Reduktionsmittel mindestens anteilig zum Auffüllen des Ammoniakspeichers eingesetzt würde. Suboptimale SCR-Wirkungsgrade wären die Folge. Hinzu kommt, dass die Vorgehensweise in der IST-Wert-Berechnung des virtuellen NOₓ/NH₃-Sensors größere Schwankungen des Reglers und somit der Reduktionsmitteldosierung zur Folge hätte.

Besonders bevorzugt wird der SOLL-Wert des PI- oder PID-Reglers in Abhängigkeit von der Raumgeschwindigkeit des Abgases, bezogen auf die erste und gegebenenfalls zweite SCR-Einheit, sowie von der mittleren Temperatur der ersten und gegebenenfalls zweiten SCR-Einheit vorgegeben. Eine solche Vorgabe erfolgt zweckmäßigerweise in Form eines entsprechenden Kennfeldes. Diese Vorgehensweise hat den Vorteil, dass die Bedatung des Motors weitgehend unabhängig von verschiedenen Motorvarianten vorgenommen werden kann. Lediglich die Erfassung des Abgasmassenstroms im Steuergerät - beispielsweise mit Hilfe eines Luftmassensensors in der Ansaugluft in Zusammenhang mit der im Steuergerät ohnehin erfassten Kraftstoffeinspritzmenge und/oder mit Hilfe eines Abgasmassenstromsensors - und die Erfassung der Abgastemperatur sind nötig. Zur Berechnung der Raumgeschwindigkeit des Abgases sind dann lediglich die Katalysatorvolumina der ersten und gegebenenfalls zweiten SCR-Einheit zu bedaten.

Die Bestimmung der mittleren Temperatur der ersten und zweiten SCR-Einheit kann entweder durch Einsatz von Temperatursensoren vor und nach der ersten und zweiten SCR-Einheit, oder durch Einsatz eines oder mehrerer Temperatursensoren anströmseitig zur ersten SCR-Einheit in Zusammenspiel mit einem in der Steuergerätesoftware hinterlegten Temperaturmodell erfolgen, wobei das Temperaturmodell aus den Sensorsignalen, dem Abgasmassenstrom und den Geometrien und Wärmekapazitäten des Abgasnachbehandlungssystems die mittlere Temperatur in den SCR-Einheiten berechnet.

Als weitere Eingangsgrößen für den PI-Regler oder den PID-Regler werden bevorzugt ein Proportionalanteil, ein Integralanteil und ein Differentialanteil, sowie eine maximal mögliche Dosiermenge für Ammoniak und/oder die zu Ammoniak zersetzliche Verbindung vorgegeben. Auch diese Eingangsgrößen sind bevorzugt abhängig von der Raumgeschwindigkeit des Abgases bezogen auf die erste und gegebenenfalls zweite SCR-Einheit, sowie von der mittleren Temperatur der ersten und gegebenenfalls zweiten SCR-Einheit.

Zur Verbesserung der Reglergeschwindigkeit wird der PI- oder PID-Regler vorzugsweise ausgestattet mit einer sogenannten "Window-Funktion". Bei dieser Funktion werden der Proportionalanteil, der Integralanteil und gegebenenfalls der Differentialanteil des Reglers mit einem parametrierbaren Verstärkungsfaktor multipliziert, wenn die Differenz von SOLL-Wert abzüglich IST-Wert vorgegebene Schwellwerte über- oder unterschreitet. Die Verstärkungsfaktoren werden so gewählt, dass die Einregelung auf den SOLL-Wert beschleunigt erfolgt.

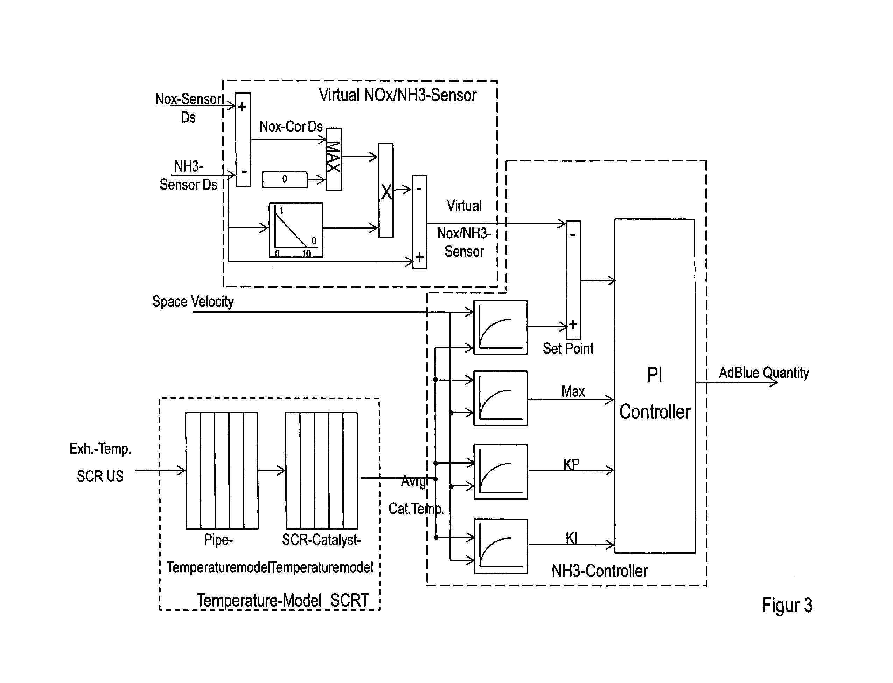

Figur 3 zeigt die zur Durchführung des erfindungsgemäßen Verfahrens benötigten Regelungsschritte, wie vorstehend erläutert, in einem Systemschaubild.

Durch Anwendung des erfindungsgemäßen Verfahrens können der in herkömmlichen Systemen zusätzlich verwendete NOₓ-Sensor anströmseitig des SCR-Katalysator und der zur Korrektur dieses Sensors erforderliche Abgasgegendrucksensor vor SCR-Katalysator eingespart werden. Weiterhin bietet das erfindungsgemäße Verfahren eine Möglichkeit zur Kontrolle der Qualität der eingesetzten Reduktionsmittellösungen ohne Verwendung des sonst zu Diagnosezwecken üblichen Harnstoffqualitätssensors im Reduktionsmitteltank. Geringe Schwankungen in der Konzentration der Reduktionsmittellösung können durch Nachregelung der Reduktionsmitteldosiermenge mittels virtuellem NOₓ/NH₃-Sensor ausgeglichen werden. Eine signifikante Unterkonzentration der Reduktionsmittellösung kann durch einen Plausibilitätsabgleich zwischen Ammoniaksensor und dem abströmseitig angeordneten NOₓ-Sensor ohne Schwierigkeiten detektiert werden, da der Ammoniaksensor in diesem Falle die Reduktionsmitteldosierung bis über einen vordefinierten Grenzwert hinaus erhöhen würde, während der abströmseitig angeordnete NOₓ-Sensor trotz vermeintlicher Reduktionsmitteldosierung deutlich zu hohe NOₓ-Werte im Abgas detektieren würde.

Des Weiteren ist es bei Anwendung des erfindungsgemäßen Verfahrens vorteilhaft, den im Abgasendrohr eingesetzten NOₓ-Sensor zur Regelung des Abgasrückführsystems zu verwenden. Die in der beschriebenen Weise erzielte höchstmögliche Effektivität des SCR-Systems ermöglicht eine optimierte Auslegung der Abgasrückführraten und somit die Erreichung höchstmöglicher NOₓ/Ruß-Verhältnisse in der Rohemission des Motors. In einem Abgasreinigungssystem mit vorgelagertem Dieselpartikelfilter können somit optimale passive Rußregenerationsraten mittels NO₂ sichergestellt werden. Zugleich ist eine Kraftstoffverbrauchsoptimierung bei gleichzeitiger Leistungsoptimierung des Motors möglich.

Das erfindungsgemäße Verfahren, in dem die Signale von Ammoniaksensor und NOₓ-Sensor im Abgasendrohr zu einem virtuellen NOₓ/NH₃-Sensor zusammengefasst werden, der den IST-Wert für den die einzuspritzende Reduktionsmittelmenge steuernden PI- oder PID-Regler liefert, stellt sicher, dass das SCR-System auch im dynamischen Betrieb des Motors stets unter optimalen Bedingungen betrieben wird. Dadurch können kurzzeitige Fehldosierungen, beispielsweise aufgrund der Alterung von Katalysatoren oder aufgrund von Bauteilschwankungen (z. B. Genauigkeit des Dosierventils, Schwankungen des Pumpendrucks), vollständig ausgeregelt werden.

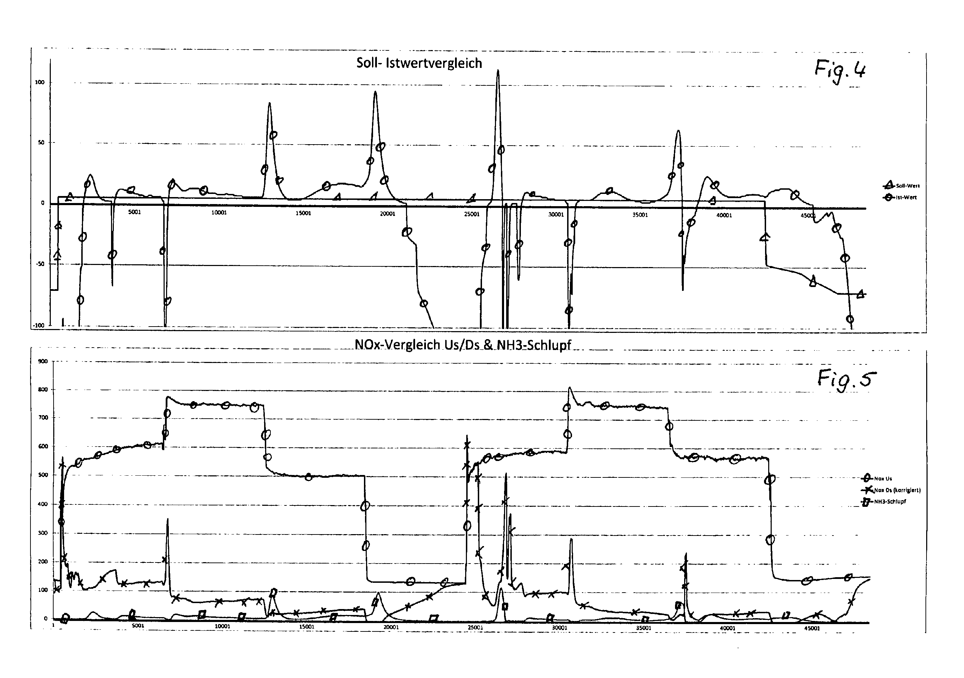

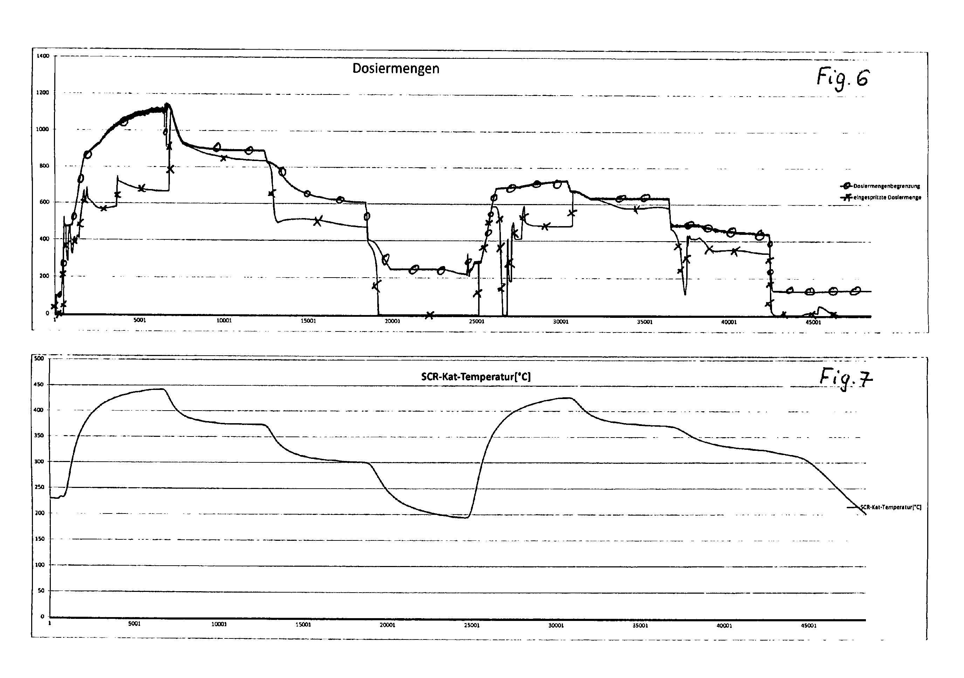

In den Figuren 4 bis 7 wird eine Referenzfahrt eines erfindungsgemäßen Fahrzeugs oder eines Geräts mit einem Dieselmotor dargestellt.

Figur 4 zeigt einen SOLL-IST-Wertvergleich.

Figur 5 zeigt einen NOₓ-Vergleich samt NA₃-Schlupf.

Figur 6 zeigt die Beziehung zwischen Dosiermenge und Dosiermengenbegrenzung.

Figur 7 zeigt die korrespondierende SCR-Katalysator-Temperatur.

## Patentansprüche

1. Verfahren zur Verminderung von Stickoxiden in Dieselmotorenabgasen mittels eines Abgasnachbehandlungssystems, umfassend in Strömungsrichtung des Abgases in dieser Reihenfolge:
eine Vorrichtung zur Eindosierung von Ammoniak und/oder einer zu Ammoniak zersetzlichen Verbindung als Reduktionsmittel in das zu reinigende Abgas;
einen oder mehrere SCR-Katalysatoren, die eine erste SCR-Einheit bilden;
einen Ammoniaksensor zur Bestimmung der Ammoniakkonzentration im Abgas nach der ersten SCR-Einheit;
einen oder mehrere SCR-Katalysatoren und/oder einen Ammoniakoxidationskatalysator, die eine zweite SCR-Einheit bilden,
und einen Stickoxidsensor (NOₓ-Sensor) zur Bestimmung der Konzentration der Stickoxide (NOₓ) im Abgasendrohr;
wobei die in das Abgas einzudosierende Menge von Ammoniak und/oder einer zu Ammoniak zersetzlichen Verbindung eingestellt wird unter Zuhilfenahme der mittels Ammoniaksensor bestimmten Ammoniakkonzentration im Abgas nach der ersten SCR-Einheit und aus der mittels NOₓ-Sensor bestimmten Stickoxidkonzentration im Abgasendrohr,
**dadurch gekennzeichnet, dass** aus den Sensorsignalen des Ammoniaksensors und des NOₓ-Sensors der IST-Wert eines virtuellen NOₓ/NH₃-Sensors berechnet wird, der als Eingangsgröße für einen PI-Regler oder einen PID-Regler dient, welcher mittels Abgleich von IST-Wert und einem vorgegebenen SOLL-Wert eine einzudosierende Menge für Ammoniak und/oder die zu Ammoniak zersetzlichen Verbindung bestimmt.

2. Verfahren nach Anspruch 1,
**dadurch gekennzeichnet, dass** die Berechnung des IST-Wertes des virtuellen NOₓ/NH₃-Sensors erfolgt durch:
1. Korrektur des NOₓ-Sensorsignals um das NH₃-Sensorsignal und Berechnung eines korrigierten NOₓ-Wertes *NOxCorDS,* welcher die tatsächliche NOₓ-Konzentration im Abgasendrohr angibt, wobei der resultierende Wert *NOxCorDS* per definitionem nicht kleiner als Null ist;
2. Multiplikation des Wertes *NOxCorDS* mit (-1) zu einem resultierenden Wert *[-NOxCorDS];*
3. Gewichtung des Wertes *[-NOxCorDS]* durch Multiplikation mit einem aus einem Kennfeld vorgegebenen Gewichtungsfaktor, wobei der Gewichtungsfaktor Werte zwischen 0 und 1 annimmt,
wobei der Gewichtungsfaktor 1 ist, solange der Ammoniaksensor im Abgas nach der ersten SCR-Einheit eine Ammoniakkonzentration detektiert, die einen ersten vorgegebenen, maximal zulässigen Wert nicht überschreitet, wobei dieser erste maximal zulässige Wert so gewählt ist, dass die dementsprechende Ammoniakkonzentration im zu reinigenden Abgas in der zweiten SCR-Einheit in allen Betriebspunkten des Motors vollständig zu Stickstoff umgesetzt werden kann,
und wobei der Gewichtungsfaktor 0 ist, wenn die durch den Ammoniaksensor detektierte Ammoniakkonzentration im Abgas nach der ersten SCR-Einheit einen zweiten vorgegebenen, maximal zulässigen Wert erreicht oder übersteigt.

3. Verfahren nach Anspruch 2,
**dadurch gekennzeichnet, dass** als SOLL-Wert die maximal zulässige Ammoniakkonzentration im Abgas nach der ersten SCR-Einheit vorgegeben wird, wobei der SOLL-Wert größer Null ist.

4. Verfahren nach einem der Ansprüche 1 bis 3,
**dadurch gekennzeichnet, dass** der vorgegebene SOLL-Wert abhängig ist von der Raumgeschwindigkeit des Abgases bezogen auf die erste und gegebenenfalls zweite SCR-Einheit, sowie von der mittleren Temperatur der ersten und gegebenenfalls zweiten SCR-Einheit.

5. Verfahren nach einem der Ansprüche 1 bis 4,
**dadurch gekennzeichnet, dass** als weitere Eingangsgrößen für den PI-Regler oder PID-Regler ein Proportionalanteil, ein Integralanteil und gegebenenfalls ein Differentialanteil, sowie eine maximal mögliche Dosiermenge für Ammoniak und/oder die zu Ammoniak zersetzliche Verbindung vorgegeben werden, wobei diese weiteren Eingangsgrößen abhängig sind von der Raumgeschwindigkeit des Abgases bezogen auf die erste und gegebenenfalls zweite SCR-Einheit, sowie von der mittleren Temperatur der ersten und gegebenenfalls zweiten SCR-Einheit.

6. Verfahren nach Anspruch 5,
**dadurch gekennzeichnet, dass** Proportionalanteil, Integralanteil und gegebenenfalls Differentialanteil mit einem parametrierbaren Verstärkungsfaktor multipliziert werden, wenn die Differenz von SOLL-Wert abzüglich IST-Wert vorgegebene Schwellwerte über- oder unterschreitet, so dass die Einregelung auf den SOLL-Wert beschleunigt erfolgt.

7. Abgasnachbehandlungssystem zur Durchführung des Verfahrens nach einem der Ansprüche 1 bis 6.

8. Fahrzeug oder Gerät mit einen Dieselmotor und einem Abgasnachbehandlungssystem zur Durchführung des Verfahrens nach einem der Ansprüche 1 bis 6.
